# EUROPEAN PATENT APPLICATION

(11) **EP 0 661 654 A2**
(43) Date of publication of application: **05.07.1995**
(21) Application number: 94118001.0
(22) Date of filing: 15.11.1994
(51) Int. Cl.: G06F 17/60

(54) **Method and system for automatic compilation of a customer information database of bank check data**

(30) Priority: 29.12.1993 US 174852
(71) Applicant: International Business Machines Corporation, Armonk, N.Y. 10504 (US)
(72) Inventor: Ostrander, John Burnie, Charlotte, NC 28211 (US)
(74) Representative: Schäfer, Wolfgang, Dipl.-Ing.

(57) **Abstract**

A system for automated compilation, storage and management of a customer profile database of information taken from bank checks transferred as payment in consumer transactions wherein bank checks received by a payee are optically scanned, either as a processing step integrated with a check payment processing routine of a financial institution, or as a separate processing routine for the dedicated purpose of recording the desired customer information, to read customer information from a face of each check such as customer/account holder name and address, monetary amount for which the check was written, date on which the check was written, and any entry in a memorandum field on the check, etc. Optically read customer information is stored in a separate customer information database selectively searchable by, for example, payee name, dollar amounts, account holder address zip code, etc. The system of the invention can be operated and maintained by financial institutions involved in the check payment processing so that such institutions can offer the customer information database as a service to payee/business establishments, or a separate scanning unit operative to perform the customer information database compilation storage and management function of the system of the invention can be located on the premises of the payee/business establishment, or the database maintained or accessible to a third party such as a marketing or advertising company to be used as a research databank for business promotion.

## Description

### FIELD OF THE INVENTION

The present invention relates generally to automatic database compilation by automated document processing and reading and, in particular, to automated handling, reading, recording, manipulation, retrieval and reproduction of information printed and written upon bank check documents to automatically compile a database of customer information taken from bank checks.

### BACKGROUND OF THE INVENTION

Retail businesses are constantly striving to acquire and utilize accurate consumer profile data on all of their customers such as information on individual customer identity, buying habits and trends, location of residence, purchase dates and amounts spent, etc. Although such information is available in connection with revolving charge accounts maintained by some retail establishments and businesses, an automated system for acquiring, organizing and making available such information on regular customers who do not maintain revolving charge accounts is lacking. Valuable costumer profile data on customers making payment by ordinary bank checks which set forth much of the desired information such as name, address, and amounts and dates of purchases, is not generally recorded from checks received as payment by retail and other businesses. Manual recording of such information from checks received is cost prohibitive. Therefore, valuable information freely presented by customers to businesses is not recorded and exploited for lack of an efficient check data capture system.

Equipment has been devised to perform high speed image processing by automated reading or scanning of characters printed and written upon documents such as bank checks. For example, U.S. Patent No. 5,097,517 discloses a character recognition apparatus which can be used for automated reading of numeric information printed or handwritten in various fields on bank checks. Commonly owned U.S. Patent No. 4,888,812 discloses a document image processing system which, in connection with for example an IBM 3890 reader/sorter, optically scans documents and converts data optically perceived on the scanned documents into video image data which can then be stored in a video image storage device at a data transfer rate comparable to the document processing speed of the reader/sorter. And U.S. Patent No. 4,724,309 discloses an automated bank check document reading device which optically identifies fields of the check coated with phosphorescent or fluorescent ink to read characters printed or written thereon. However, storage of video image data of the entire bank check document or of fields of the document does not provide a dedicated system for compiling such data into a searchable database of specific customer information useful to a retail business such as name, address and a corresponding monetary amount.

U.S. Patent No. 5,201,010 discloses a customer check transaction processing system for building an in-store database of customer purchasing data wherein checking account numbers, read by a MICR reader in the store, are used as a unique customer identification number which is matched to an in-store database of customer records for check transaction verification. The database is updated with each customer check transaction and can be used to provide information for marketing functions targeted at the check writing customers of a particular store.

U.S. Patent No. 4,872,113 discloses a system in which a check cashing code, issued in exchange for economic and demographic data on the customer, is assigned to each store customer wishing to make payments by check. The check cashing code is then correlated to a bar code scan-generated list of items purchased to compile consumer data for marketing reports to manufacturers.

Japanese patent application No. 59-103177 discloses a business card reader which scans and records name and address data of business cards for storage in and retrieval from a business card data memory. Recording and storage of name and address information in this context, however, does not correlate such data to useful consumer information. And U.S. Patent No. 3,755,655 discloses a machine processed data card, which may contain customer name and address, having a removable tab which when removed enables the processing machine to identify and isolate the card for editing of the information on the card.

In these and other document processing methods and apparatus, valuable customer identification data correlated to transactional amount data is not automatically compiled separate from or integral with a check clearing/payment process whereby such data can be easily accumulated and stored without extensive additional hardware, software and/or operator involvement. Thus there exists a need for efficient collection, storage and retrieval of such information from checks integrable with existing check acceptance and processing operations of businesses and check clearing financial institutions.

### SUMMARY OF THE INVENTION

The present invention provides a system for acquisition, compilation, storage and retrieval of customer profile information printed and written upon bank checks tendered as payment by customers in retail transactions and processed for completion of check payment instructions in an automated check processing routine.

In accordance with one aspect of the invention, a system for compiling a database of customer profile information on customers of retail and other types of businesses is provided wherein automated reading, recording and storage of information printed and written upon a bank check transferred as payment in a retail or individual consumer transaction is performed to acquire, store and make available customer profile information contained on bank check documents. Bank checks received as payment are scanned by an image scanner which optically recognizes characters printed and written on a scanned face of the checks. Optically recognized characters are converted in the sequence read into digital electrical signals which are stored in a digital data storage device, to create a customer profile information database which can be searched to provide specified data.

In accordance with another aspect of the invention, a system for accumulating valuable consumer profile data on customers of retail and other businesses is provided wherein information such as name, address, and amount paid appearing on a negotiable instrument such as a bank check transferred as payment by the customer is selectively automatically recorded from the negotiable instrument and stored in a specialized database to provide a source of specific customer information for use by consumer businesses.

In accordance with still another aspect of the invention, an automated process for compiling a database of customer information taken from bank checks presented by customers as payment in business transactions is provided which includes the steps of optically scanning checks received as payments in business transactions to automatically recognize names, addresses and numbers as they appear on the checks, electronically recording the optically recognized information in a customer information database, and searching said database according to specified parameters to provide customer information to businesses which received the checks as payments.

To the accomplishment of the foregoing and related ends the invention then includes at least the features hereinafter fully described and particularly pointed out in the claims, the following description annexed drawings setting forth in detail certain illustrative embodiments of the invention, these being indicative, however, of but a few of the various ways in which the concepts and principles of the invention may be employed.

### BRIEF DESCRIPTION OF THE DRAWINGS

In the annexed drawings:
- FIG. 1: is a representation of a front face of a private account bank check made out as payment to a business-payee in a business transaction;
- FIG. 2: is a schematic representation of an automated document handling reader/sorter system in which automated capture of customer information data is performed in accordance with the present invention;
- FIG. 3: is a schematic representation of a video image scanning and recording system used to record customer information data from bank checks in accordance with the present invention, and
- FIG.4: is a schematic representation of an optical field scanning system used to record customer information data from bank checks in accordance with the present invention.

### DESCRIPTION OF ILLUSTRATED EMBODIMENT

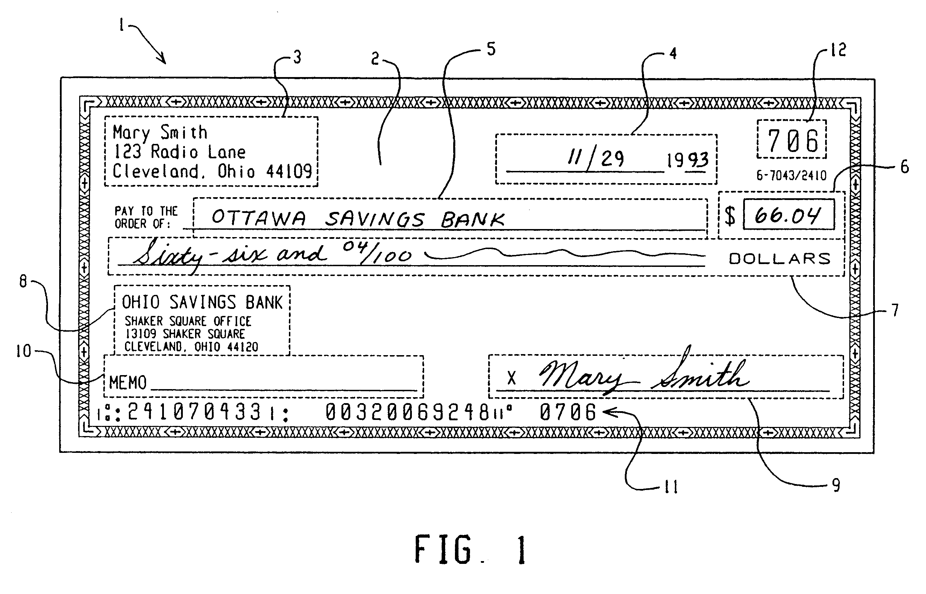

Figure 1 illustrates a front face 2 of a bank check 1 corresponding to a single private individual account, endorsed by the account holder/maker and made out to a business establishment payee as payment in a retail transaction. In accordance with requirements of the Uniform Commercial Code, Regulation CC of the Federal Reserve Board of Governors and general banking customs, the front face 2 of a bank check instrument such as illustrated typically contains certain specified information in specifically located fields including an account holder/maker name and address field 3, a date field 4, a payee name field 5, a numeric amount field 6, a written amount field 7, a drawee bank name and address field 8, a maker's endorsement field 9, and a memorandum field 10. The face 2 of a bank check typically also includes along the bottom numeric account information, indicated generally at 11, at least a portion of which is magnetically encoded to allow the account information to be read by a machine such as a MICR. Thus the front face 2 of the bank check instrument sets forth at least several items of customer/consumer data useful (outside of check payments processing) to the business payee such as for example the customer's name and address, the amount paid, the date of the transaction, and the identity and address of the drawee bank where the customer maintains the account. Additional information included on many bank check instruments which may also be of interest to retail and other business establishments includes telephone numbers of the account holders, the date on which the account was opened, entries in the memorandum field 10, and, in the case of two-party checks, which of the two named parties endorsed the check in the maker's endorsement field 9.

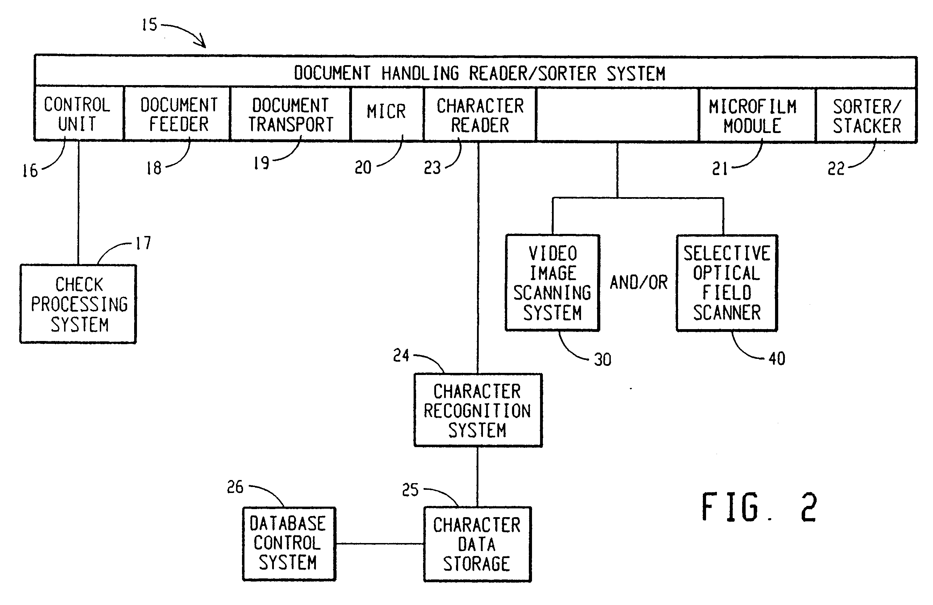

In order to automatically and rapidly read, store, manipulate, manage and update customer information for use by business payees (for purposes other than completing the check payment process), the automatic customer information database compilation system of the present invention may be embodied as a component of a commercially available high speed document handling reader/sorter system such as represented schematically in Figure 2 and indicated generally at 15. The document handling reader/sorter system 15 may include, for example, the IBM 3890 reader/sorter for processing documents such as bank checks at a high rate of speed, e.g., on the order of about 2400 documents per minute. The document reader/sorter system includes a control unit 16 which may be operatively connected in a known manner to other components of a check processing system 17. A document feeder 18 typically includes a hopper for receiving a supply of documents and a feed mechanism for directing successive documents from the hopper to a document transport 19 which transports each document through the described processing steps. As the documents are transported through the reader/sorter by the document transport 19, they may be directed past an MICR module 20 which reads the numeric account information encoded on magnetic ink characters in the numeric account information field 11. The documents may also be directed past an optional microfilm module 21 whereby images of the front and/or back of each document are recorded on microfilm as a form of permanent record storage. The documents are ultimately transported to a sorter/stacker 22 which may include a series of output bins into which the documents are sorted. The aforedescribed components are conventionally integrated with a high speed document handling reader/sorter system of the type customarily used in the check processing operations of financial institutions.

To accomplish the specific data capture objective of this invention, another component which may be included in the document handling reader/sorter system 15 is a character reader 23 which performs optical character recognition of optically perceptible alpha-numeric data on the documents, irrespective of whether such data is magnetically or otherwise encoded. Character recognition devices capable of identifying and digitizing printed, typed and handwritten characters are well developed and known in the art, such as for example the method and apparatus described in U.S. Patent No. 5,097,517, the entire disclosure of which is hereby fully incorporated by reference. The inclusion of this type of broad range character reader into a check payments processing system insures that virtually all of the data appearing on the checks is recorded in digitized form. The output of the character reader 23 is received by a character recognition system 24 which performs the recognition and digitizing operations and stores the results in a character data storage 25. Character data storage 25 can then be selectively searched by a database control system 26 for, for example, payee name, account holder zip code, payment amount, or any other desired parameters to produce customized data for use in marketing customer research and analysis by business payees.

In an alternate embodiment of the character recognition aspect of the invention which performs automatic capture of the desired customer information otherwise not recorded in the course of routine check processing, a high speed video image scanning system 30, such as described in commonly owned U.S. Patent No. 4,888,812 entitled DOCUMENT IMAGE PROCESSING, the entire disclosure of which is hereby fully incorporated herein by reference, may be used in the document handling reader/sorter system in lieu of or in addition to character reader 23 and/or microfilm module 21. As documents flow through video image scanning system 30, at least one face of the documents, such as for example a front face, is optically scanned to record optically perceptible information appearing on the documents as video image data. As described by the '812 patent, the video image scanning system 30 may, for example, comprise a charge coupled device (CCD) scanner array which generates a sequence of analog values representing light and dark areas which define the image on the document.

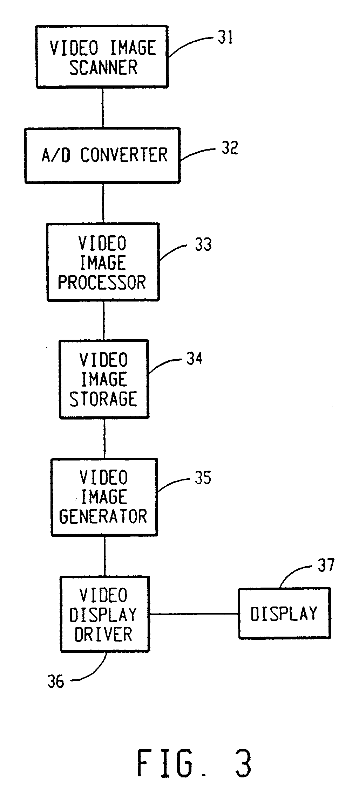

As shown schematically in Figure 3, the video image scanning system 30 includes at least one scanner 31 (such as a CCD array) operatively connected to an analog-to-digital converter 32 which converts the analog values generated by scanner 31 into discrete binary grey scale values of, for example, 256 grey scale levels. The A/D converter output is input to an image processor 33 which compiles the video image data for storage in a video image storage device 34 from which a video image can be retrieved and a display generated upon a display device 37 by a video image generator 35 and video display driver 36.

Optical image scanner 31 may include multiple scanners to simultaneously record video image data from the front and back faces of the documents. Accurate automated recording of virtually all of the optically perceptible information on scanned face(s) of the bank check documents is thereby performed by such video image recording (in the context of routine check processing by financial institutions), which results in a check information database containing the desired customer information. Such database can then be selectively searched for certain specified items of information such as the account holder/maker's name and address and the corresponding dollar amount for checks made out to a common payee. For example, following compilation of a quantum of such data accumulated in the normal course of check processing, the bank or financial institution maintaining control of the image or video image storage device 34 can perform selective searching of the database therein to retrieve, for a requesting payee, from each of the recorded bank checks the account holder's name and address and the corresponding dollar amount for which the check was written to the designated payee. The retrieved information can then be provided to the payee as a custom data service. Optionally, such a custom data service can be tailored to particular requests of a retail business payee to provide any combination of bank check data desired in any desired format. A hard copy printout of the selected data can be produced for distribution to the requesting business payee, or the information could be electronically transferred or provided on a computer disk or tape.

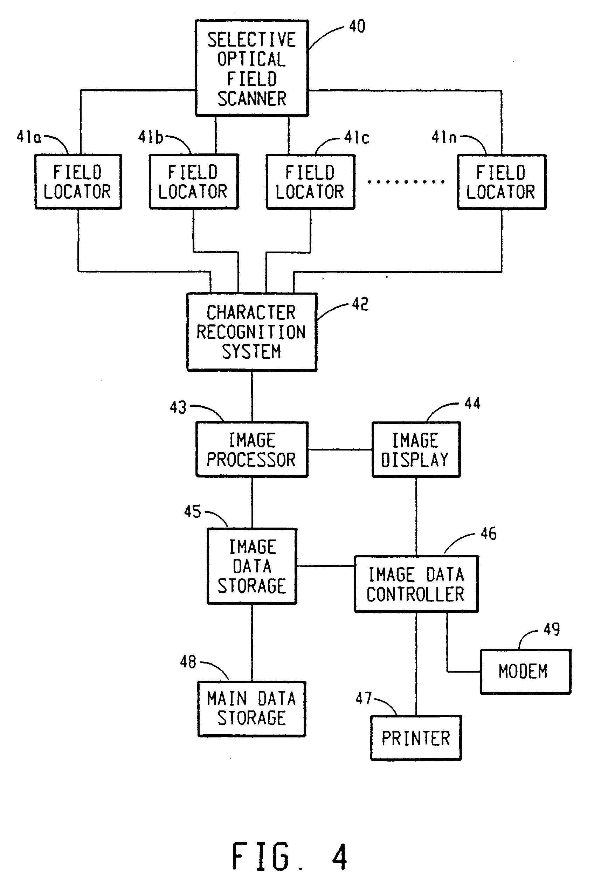

In still another embodiment of the customer information data capture operation of the invention integrated with an automated check payments processing system, bank check documents may be transported past a selective optical field scanner 40, shown as an alternative or additional component to the system of Figure 2, which selectively optically reads specified fields of front face 2 of a check, such as, for example, the numeric amount field box 6, and/or any other field of interest such as the written amount field 5, the account holder/maker name and address field 3, the memorandum field 10, etc. As schematically illustrated by Figure 4, dedicated field locators 41a-41n generate probabilities of the coordinates of focus for the scanner to locate the assigned fields. For example, a dedicated field locator assigned to scan the numeric check amount field 6 may utilize the dollar symbol ("$") as a coordinate to the left of the numeric check amount field box, a fluorescent background to the numeric check amount field box as is known in the art, a straight coordinate system or a dimension system where known dimensions of the box or rectangle are utilized to locate the defined field. Information read by the optical scanner from the various fields is then fed to a character recognition system 42 which supplies digitized representations of identified characters to an image processor 43 for output to an image display 44 and/or storage in an image data storage device 45. An image data controller 46 allows image data selection display upon display 44 and output to an image printer 47 or downloading to a central bank check main data storage 48. Image data controller 46 can also perform electronic transfer of selected data by a modem 49.

Optical field scanning by selective "lift off" is further described in U.S. Patent No. 5,097,517, the entire disclosure of which is hereby fully incorporated by reference, explaining reconstruction of images of the selectively scanned fields in hard copy in the form of, for example, a bank statement. Such systems are designed to truncate complete check routing, i.e., back to the maker, as is common with most banks, to instead provide the account holder/maker of the check with an image of cancelled checks. By
the same selective scanning, storage and reproduction of selected fields, such as the account holder name and address field and the numeric amount field from the faces of customer bank checks, a customer information database can be compiled for marketing or other useful reference by businesses receiving payments by checks.

The present invention also contemplates implementation of automated recording, storing, and compilation of customer information from bank checks as a separate processing routine, segregated from handling, reading and sorting of bank checks done for the purpose of carrying out the payment instructions. As a separate processing routine, automated recording, storing and compilation of customer and customer purchases information can be performed prior to introduction of a group of checks into a document handler reader/sorter system, for example as a pre-scanning data-acquisition operation dedicated to compilation of customer information, such as represented in Figure 3 and Figure 4. Document handling apparatus may also be used in connection with dedicated customer information scanning processing. Furthermore, a separate scanning device embodying the elements of the systems of Figure 3 and Figure 4 may be located at the point-of-sale, such as at sales counters of retail stores, whereby checks received as payments are scanned to record the customer information before being deposited with a bank for payment. Alternatively, a separate scanning system may be maintained at any bank adjacent a payment processing document reader/sorter. For example, video image scanner 31 could be arranged to precede the progression of the check handling processes of physical input of checks into the document handling reader/sorter system 15. Alternatively, customer information database compilation scanning can be incorporated into the check processing sequence of the document reader 15 as described above. And further alternatively, customer information database compilation scanning of checks can of course be performed at any point following a final processing step of system 15.

Although the invention has been shown and described with respect to certain preferred embodiments, it is obvious that equivalent alterations and modification will occur to other skilled in the art upon reading and understanding this specification. The present invention includes all such equivalent alterations and modifications and is limited only by the scope of the following claims.

## Claims

1. A system for compiling a database of customer information by capturing and reproducibly storing printed and handwritten data appearing on bank checks received by businesses as payments, the system comprising:
a check handling and transport device for receiving and transporting a plurality of checks successively along a check scanning line,
a check scanning device positioned adjacent said check scanning line optically to detect in a relative order images of non-magnetically encoded printed, typed and handwritten characters appearing on each check of said series of checks, said characters including characters representing a name and address of a maker for each check,
a character recognition device for recognizing and converting said optically detected character images of each of said checks to electrical signals indicative of said characters in the relative order of said characters,
a character selection device for selecting from the scanned and recognized character images of each of said checks items of data including data of characters representing names and addresses of makers for each check,
a storage device for storing said selected items of data,
a storage retrieval device for retrieving from said storage device said selected items of data.

2. The system of claim 1 further comprising a converter for converting said selected items of data retrieved from said storage device to images of said characters of said selected items of data as optically detected in the relative order detected, and
a character data reproduction device for reproducing said images of said selected items of data retrieved from said storage device.

3. The system of claim 1 or 2 wherein one of said selected items of data selected from each check includes at least one numeric value representing a monetary amount to be paid by the check, and/or a date on which the check was written, and/or a name of a payee of the check.

4. The system of claim 1 wherein said check scanning device selectively scans specified fields of each of said checks.

5. The system of claim 1 wherein said storage retrieval device is operative to retrieve said selected items of data from said storage device in a format wherein a monetary amount scanned and selected from each check is matched to a maker's name appearing on the check.

6. The system of claim 2 wherein the selected items of data of each check include data of optically detectable images on a scanned face of each check, and said storage retrieval device is operative to selectively retrieve specified items of data of said selected items of data from said storage device.

7. An automated document reading and data storage system for automatic compilation of customer profile data taken from information set forth upon customer bank checks transferred as payment in consumer transactions, the system comprising,
an optical scanner for optically detecting printed and handwritten characters in specified fields of checks containing customer profile information including a name and address of a maker of the check, a monetary amount which the check instructs to be paid, and a check payee's name,
a character recognition device for identifying said characters in an order in which said characters appear on said check and generating electrical signals indicative of said recognized characters in said order,
a character data selection device for selecting specified items of data representing said identified characters,
a data converter for converting specified items of data chosen by said character data selection device into digital electronic signals, and
an electronic storage device for retrievably storing said digital signals of said specified items of data.

8. The system of claim 7 wherein said optical scanner, character recognition device, character data selection device, data converter and electronic storage device are all included in a single unit adapted to receive bank checks for optical scanning, character recognition, character selection of specific items of data, conversion of selected characters, and electronic storage of digital signals of said data.

9. The system of claim 8 wherein said single unit is integrated with an automated check processing machine, or a stand alone device located at a point-of-sale where checks are tendered as payment.

10. The system of claim 8 wherein said single unit includes a data port connectable to a computer for transfer of data from said single unit to a computer.

11. The system of claim 7 further comprising a data controller interfaced with said single unit for selectively searching and retrieving data within said electronic storage device of said single unit.

12. A process for creating and updating a database of customer information from customer information data set forth upon checks received as customer payments in business transactions, the database compilation process comprising the steps of:
selectively scanning each of said checks to optically read only selected customer information from specified areas of a face of each check, said selected customer information optically read from each check including a name and address of a maker of the check, and
storing said optically read selected customer information in a customer information database.

13. The process of claim 12 wherein said optically read selected customer information includes a name of a customer payee indicated in a specified area of a face of each check, and further comprising the step of scanning to optically read a customer payee from each check.

14. The process of claim 12 wherein said optically read selected customer information includes characters indicating a numeric value representing a monetary amount to be paid by each check.

15. The process of claim 14 wherein the step of storing optically read selected customer information includes correlating names of makers of checks with corresponding monetary amounts to be paid by said checks within a storage device containing said customer information database.

16. The process of claim 12 wherein the step of scanning of checks is performed integral with an automated check processing routine, said automated check processing routine performed for the purpose of executing payment instructions of checks.

17. The process of claim 12 performed separate from a check processing routine performed for the purpose of executing payment instructions of checks.

18. The process of claim 17 performed at a point-of-sale at which checks are tendered as payment in business transactions.

19. The process of claim 12 wherein the step of scanning is controllable to selectively scan and optically read specified areas of the faces of said checks.

20. The process of claim 12 further comprising the step of selectively searching said customer information database by operation of a database controller.
